# EUROPÄISCHE PATENTSCHRIFT

(11) **EP 1 893 437 B1**
(45) Veröffentlichungstag und Bekanntmachung des Hinweises auf die Patenterteilung: **18.11.2009**
(21) Anmeldenummer: 06754059.1
(22) Anmeldetag: 02.06.2006
(51) Int. Cl.: B60N 2/225

(54) **BESCHLAG FÜR EINEN FAHRZEUGSITZ**
FITTING FOR A VEHICLE SEAT
FERRURE POUR SIEGE DE VEHICULE

(30) Priorität: 22.06.2005 DE 102005028779
(43) Veröffentlichungstag der Anmeldung: 05.03.2008
(73) Patentinhaber: KEIPER GmbH & Co. KG, 67657 Kaiserslautern (DE)
(72) Erfinder: STEMMER, Jürgen, 42897 Remscheid (DE); MESSERSCHMIDT, Rainer, 40211 Düsseldorf (DE); EWALD, Tobias, 45257 Essen (DE); SCHOLZ, Grit, 42853 Remscheid (DE); NORBISRATH, Andreas, 42279 Wuppertal (DE); KOMAINDA, Artur, 42855 Remscheid (DE); FINNER, Holger, 42499 Hückeswagen (DE); LEHMANN, Ulrich, 53347 Alfter (DE)
(74) Vertreter: Patentanwälte Hosenthien-Held und Dr. Held
(86) Internationale Anmeldenummer: PCT/EP2006/005254
(87) Internationale Veröffentlichungsnummer: WO 2006/136274

(56) Entgegenhaltungen:
- EP-A- 1 013 500
- DE-A1- 4 436 101
- DE-U1-202004 009 594
- US-A1- 2004 014 545
- US-A1- 2004 258 101

## Beschreibung

Die Erfindung betrifft einen Beschlag für einen Fahrzeugsitz mit den Merkmalen des Oberbegriffs des Anspruches 1.

Bei einem aus der DE 44 36 101 A1 bekannten Beschlag dieser Art sitzen die Keilsegmente direkt auf einem Kragenzug des ersten Beschlagteils. Die Haftreibung aufgrund der Materialpaarung Stahl auf Stahl trägt zur Ablaufsicherheit des Beschlags bei. Wenn der Beschlag angetrieben wird, bewegen sich die Keilsegmente mit der geringeren Gleitreibung um den Kragenzug herum. Eine vergleichbar aufgebauter und funktionierender Beschlag ist aus der EP 1013 500 A2 bekannt.

Die US 2004/0014545 A zeigt einen Beschlag mit einem Exzentergetriebe, das zum Sperren der abtriebsseitig eingeleiteten Drehmomente offensichtlich selbsthemmend ist. Zur Spielfreistellung und zur Erzeugung der Selbsthemmung verspannt eine Feder zwei axial geschachtelte Exzenterteile gegeneinander, was die Exzentrizität und damit die die Reibung erzeugenden Normalkräfte im Getriebe vergrößert. In der DE 20 2004 009 594 U1 und der US 2004/0258101 A1 sind Beschläge beschrieben, bei denen die Keilsegmente mit ihrer Außenseite mittels des ersten Gleitlagers am zweiten Beschlagteil gelagert sind, während sie mit ihrer Innenseite - geringfügig beweglich - auf einem Exzenterring sitzen, der wiederum mittels eines zweiten Gleitlagers auf einem Kragenzug des ersten Beschlagteils sitzt.

Der Erfindung liegt die Aufgabe zu Grunde, einen Beschlag der eingangs genannten Art zu verbessern. Diese Aufgabe wird erfindungsgemäß durch einen Beschlag mit den Merkmalen des Anspruches 1 gelöst. Vorteilhafte Ausgestaltungen sind Gegenstand der Unteransprüche.

Indem wenigstens ein erstes der beiden Keilsegmente mittels eines zweiten Gleitlagers oder Wälzlagers mit geringer Reibung am ersten Beschlagteil gelagert ist, also beidseitig mittels Gleitlager oder Wälzlager gelagert ist, wobei die Reibung zwischen dem Gleitlager (oder Wälzlager) und dem relativ zu diesem gleitenden Bauteil geringer ist als die direkte Reibung zwischen den Keilsegmenten und den Beschlagteilen, reduzieren sich die Verluste beim Antreiben des Beschlags, d.h. während der Einstellbewegung, womit sich der Wirkungsgrad des Beschlags erhöht. Bei gleicher Abtriebsleistung ist somit eine geringere Antriebsleistung nötig. Die Spielfreiheit und die Festigkeit bleiben erhalten. Die geringere Reibung des Gleitlagers gegenüber gewöhnlichem Stahl beruht auf einer speziellen Oberflächenbearbeitung und/oder -behandlung. Die geringere Reibung des Wälzlagers gegenüber der Gleitreibung von gewöhnlichem Stahl beruht auf der Rollreibung der Wälzkörper. Die Gleitlager oder Wälzlager können auch in gemischter Kombination vorgesehen sein. Die Keilsegmente im Sinne der Erfindung können auch jeweils an einer Scheibe ausgebildet sein, wobei dann die beiden (exzentrischen) Scheiben axial versetzt zueinander angeordnet sind.

Da ein beidseitig mittels Gleitlagern gelagertes Keilsegment nicht mehr selbsthemmend ist, und damit auch der Beschlag gegebenenfalls nicht mehr selbsthemmend wäre, ist wenigstens auf einer Fahrzeugsitzseite eine Bremse für das besagte Keilsegment vorgesehen, welche im Ruhezustand des Beschlags das Keilsegment hält und welche beim Antrieb der Abwälzbewegung gelöst wird. Ein derartiger Beschlag ist sowohl ablaufsicher als auch günstig bezüglich des Wirkungsgrades. Auf der anderen Fahrzeugsitzseite braucht keine derartige Bremse im Beschlag vorgesehen zu sein.

Da die Lehne mehr nach hinten als nach vorne belastet wird, ist ein Keilsegment höher belastet, so dass an diesem prinzipiell eine höhere Reibung auftritt. Vorzugsweise ist daher das höhere belastete Keilsegment das beidseitig mittels Gleitlager gelagerte Keilsegment. Es können jedoch auch das andere Keilsegment oder -ebenfalls bevorzugt - beide Keilsegmente beidseitig mittels Gleitlagern gelagert sein.

Der erfindungsgemäße Beschlag kann sowohl manuell als auch motorisch betrieben und in Fahrzeugsitzen eingesetzt werden, vorzugsweise zur Einstellung der Lehnenneigung oder der Neigung des Sitzkissens oder einer Oberschenkelunterstützung oder der Sitzhöhe. Der Mitnehmer kann einteilig oder mehrteilig sein.

Eine bevorzugte Bremse ist eine Schlingfederbremse, welche ein hohes abtriebsseitiges Sperrmoment liefert, bei einer antriebsseitigen Einleitung eines Drehmomentes aber mit einem im Verhältnis zum Sperrmoment geringen Freilaufmoment mitdreht. Statt einer Schlingfederbremse kann auch ein Klemmrollenfreilauf vorgesehen sein. Die Schlingfederbremse erzeugt ihr Sperrmoment vorzugsweise durch Anlage an eine Schlingfederbuchse, welche drehfest zum zweiten Beschlagteil ist, vorzugsweise durch einen Formschluss zwischen geeigneten Vorsprüngen, beispielsweise radial abstehenden Armen, der Schlingfederbuchse und einer herstellungsbedingt vorhandenen Innenverzahnung des zweiten Beschlagteils. Die Schlingfederbremse ist vorzugsweise innerhalb der Schlingfederbuchse angeordnet, so dass sie an deren Innenwand anliegt und ihre üblicherweise vorhandene Schlingfederarme radial nach innen ragen. Letztere sind vorzugsweise so angeordnet, dass ein Nocken eines oder beider Keilsegmente bei Anlage an einen Schlingfederarm schließend und ein oder zwei Nocken des sich beim Antrieb drehenden Mitnehmers bei Anlage an einen Schlingfederarm öffnend auf die Schlingfederbremse wirken.

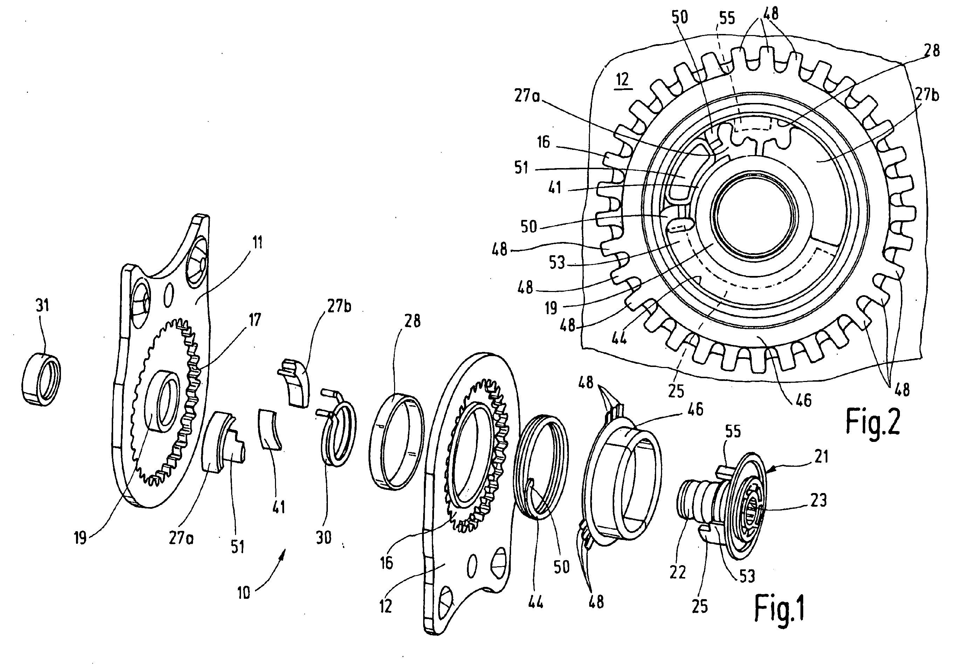

Im folgenden ist die Erfindung anhand zweier in der Zeichnung dargestellten Ausführungsbeispiele näher erläutert. Es zeigen
- Fig. 1: eine Explosionsdarstellung des ersten Ausführungsbeispiels,
- Fig. 2: eine Teilansicht des ersten Ausführungsbeispiels mit nur teilweise angedeu- tetem Mitnehmer,

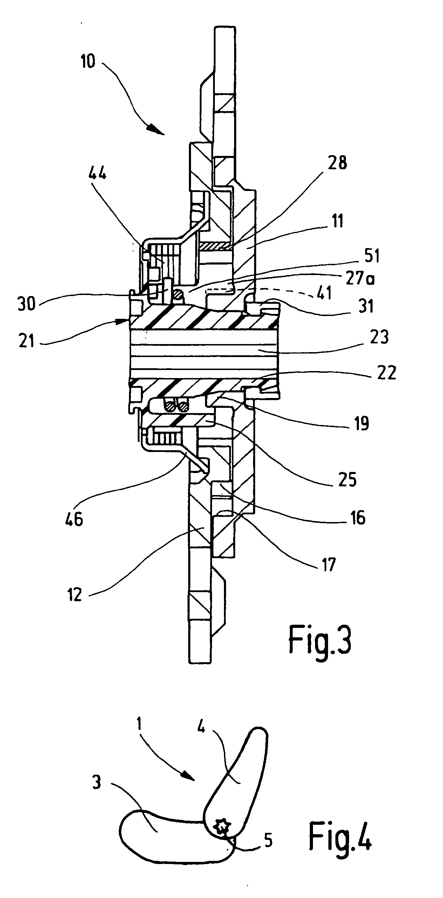

- Fig. 3: einen Längsschnitt eines erfindungsgemäßen Beschlags,
- Fig. 4: eine schematische Darstellung eines Fahrzeugsitzes,

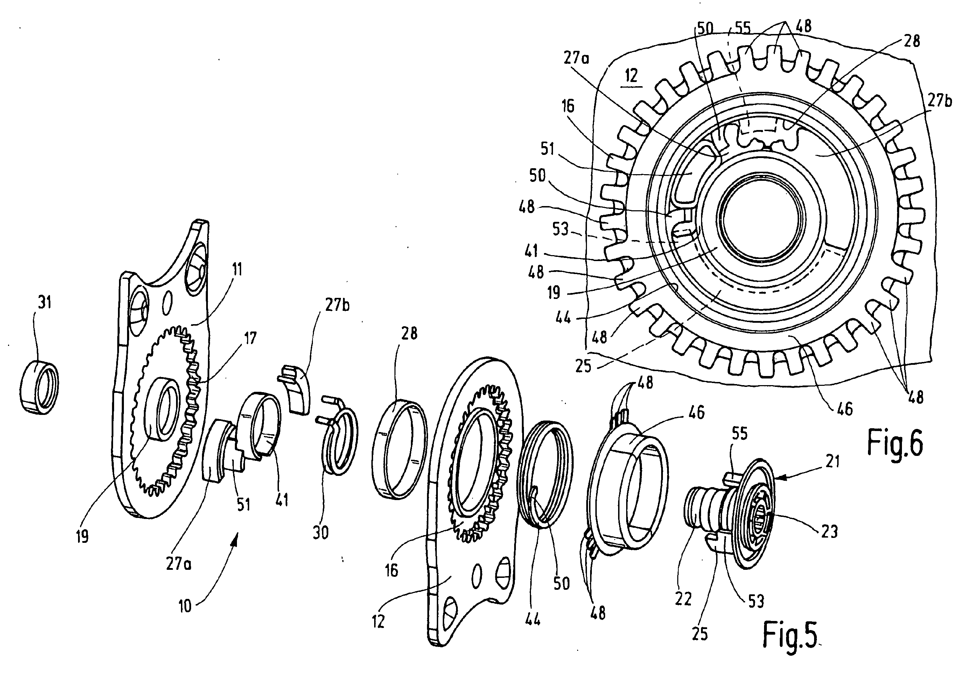

- Fig. 5: eine Explosionsdarstellung des zweiten Ausführungsbeispiels, und
- Fig. 6: eine Teilansicht des zweiten Ausführungsbeispiels ohne Mitnehmer.

Ein Fahrzeugsitz 1 für ein Kraftfahrzeug weist ein Sitzteil 3 und eine relativ zum Sitzteil 3 in ihrer Neigung einstellbare Lehne 4 auf. Ein für die Neigungseinstellung manuell zu betätigendes Handrad 5 auf einer Seite des Fahrzeugsitzes 1 dreht eine nicht näher dargestellte Antriebswelle, welche horizontal im Übergangsbereich zwischen Sitzteil 3 und Lehne 4 angeordnet ist und auf beiden Seiten des Fahrzeugsitzes 1 drehfest in je einen Beschlag 10 eingreift. Die Lehne 4 ist mittels der beiden Beschläge 10 mit dem Sitzteil 3 verbunden.

Der Beschlag 10 ist als Getriebebeschlag ausgebildet, bei welchem ein erstes Beschlagteil 11 und ein zweites Beschlagteil 12 über ein als - wenigstens bei einem der beiden Beschläge 10 des Fahrzeugsitzes 1 selbsthemmendes - Exzenterumlaufgetriebe ausgebildetes Getriebe zum Verstellen und Feststellen miteinander verbunden sind. Die beiden Beschlagteile 11 und 12 weisen eine im wesentlichen flache Form auf und bestehen aus Stahl. Das erste Beschlagteil 11 ist fest mit der das Handrad 5 und die Antriebswelle lagernden Struktur (vorliegend der Struktur der Lehne 4) verbunden, weshalb im Ausführungsbeispiel das erste Bauteil 11 lehnenfest und daher in der Zeichnung oben dargestellt ist. Entsprechend ist das zweite Beschlagteil 12 im Ausführungsbeispiel sitzteilfest, d.h. mit der Struktur des Sitzteiles 3 verbunden, und in der Zeichnung unten dargestellt. Die Positionen der Beschlagteile 11 und 12 können je nach Anforderung ausgetauscht sein.

Zur Ausbildung des Getriebes ist am zweiten Beschlagteil 12 ein Zahnrad 16 mit einer Außenverzahnung und am ersten Beschlagteil 11 ein Zahnkranz 17 mit einer Innenverzahnung ausgeprägt, welche miteinander kämmen. Der Durchmesser des Kopfkreises der Außenverzahnung des Zahnrads 16 ist um wenigstens eine Zahnhöhe kleiner als der Durchmesser des Fußkreises der Innenverzahnung des Zahnkranzes 17. Der entsprechende Unterschied der Zähneanzahl von Zahnrad 16 und Zahnkranz 17 ermöglicht eine Abwälzbewegung des Zahnkranzes 17 am Zahnrad 16.

Das erste Beschlagteil 11 weist auf der dem Zahnrad 16 zugewandten Seite konzentrisch zur Innenverzahnung des Zahnkranzes 17 einen angeformten Kragenzug 19 auf. Im Kragenzug 19 ist mit Spiel ein Mitnehmer 21 mittels einer Nabe 22 gelagert. Der aus Kunststoff bestehende Mitnehmer 21, durch dessen Anordnung die verwendeten Richtungsangaben definiert sind, ist zentral mit einer zu einem Keilwellenprofil der Antriebswelle passenden, axial verlaufenden Bohrung 23 versehen. Ferner weist der Mitnehmer 21 ein angeformtes Mitnehmersegment 25 auf, welches sichelförmig um einen Teil des Kragenzuges 19 herum angeordnet ist. Auf dem Kragenzug 19 sind wenigstens indirekt mit ihrer gekrümmten Innenseite zwei Keilsegmente 27a und 27b abgestützt, die mit ihren gekrümmten Außenseiten ein in das zweite Beschlagteil 12 drehfest eingepresstes erstes Gleitlager 28 lagern. Die Reibung zwischen der Außenseite der metallischen Keilsegmente 27a und 27b und der Innenseite des buchsenförmigen ersten Gleitlagers 28 ist deutlich geringer als es die direkte Reibung zwischen den Keilsegmenten 27a und 27b und den Beschlagteilen 11 oder 12 wäre.

Das Mitnehmersegment 25 fasst mit Spiel zwischen die Schmalseiten der Keilsegmente 27a und 27b, während die einander zugekehrten Breitseiten der Keilsegmente 27a und 27b jeweils einen abgewinkelten Endfinger einer ringförmig aufgewickelten Feder, im folgenden als Omegafeder 30 bezeichnet, abstützen. Die Omegafeder 30 drückt die Keilsegmente 27a und 27b in Umfangsrichtung auseinander und stellt damit den Beschlag 10 im Ruhezustand spielfrei. Der Mitnehmer 21 wird auf der Außenseite des ersten Beschlagteils 11 durch einen aufgeclipsten Sicherungsring 31 axial gesichert. Zur Aufnahme der axial wirkenden Kräfte ist in an sich bekannter Weise an den beiden Beschlagteilen 11 und 12 je ein in der Zeichnung nicht dargestelltes Halteblech angeschweißt, welches das jeweils andere Beschlagteil übergreift, ohne die Einstellbewegung zu behindern.

Durch das Mitnehmersegment 25 und die Keilsegmente 27a und 27b wird ein Exzenter definiert, welcher in Verlängerung der Richtung der Exzentrizität das Zahnrad 16 und den Zahnkranz 17 an einer so definierten Eingriffsstelle ineinander drückt. Bei einem Antrieb durch die sich drehende Antriebswelle wird ein Drehmoment zunächst auf den Mitnehmer 21 und dann auf den so definierten Exzenter übertragen, welcher entlang des ersten Gleitlagers 28 gleitet unter Verlagerung der Richtung der Exzentrizität und damit unter Verlagerung der Eingriffsstelle des Zahnrades 16 im Zahnkranz 17, was sich als taumelnde Abwälzbewegung der Beschlagteile 11 und 12 aneinander darstellt.

Aufgrund des Gewichts der üblicherweise schräg stehenden Lehne 4 und eines vom Insassen ausgeübten Druckes auf die Lehne 4 kann bei den Keilsegmenten 27a und 27b zwischen einem höher belasteten ersten Keilsegment 27a, das bei einer Aufwärtsbewegung der Lehne 4 voreilt, und einem geringer belasteten zweiten Keilsegment 27b unterschieden werden. Der Wirkungsgrad des Beschlags 10 hängt merklich von der Reibung zwischen dem ersten Keilsegment 27a und dem Kragenzug 19 ab. Erfindungsgemäß ist zur Verringerung dieser Reibung ein zweites Gleitlager 41 vorgesehen, das praktisch unbeweglich am ersten Keilsegment 27a sitzt und mit geringer Reibung auf dem Kragenzug 19 gleitet, also funktionell dem ersten Gleitlager 28 entspricht.

Im ersten Ausführungsbeispiel ist das zweite Gleitlager 41 als Ringsegment ausgebildet, welches sich über etwas weniger als die Innenseite des ersten Keilsegmentes 27a erstreckt, während im zweiten Ausführungsbeispiel das zweite Gleitlager 41 als nahezu vollständig geschlossener Ring ausgebildet ist, auf welchem auch das geringer belastete Keilsegment 27b sitzt. Da ansonsten - bis auf geometrische Anpassungen an die Form des zweites Gleitlagers 41 - die beiden Ausführungsbeispiele übereinstimmen, tragen gleiche und gleichwirkende Bauteile gleiche Bezugszeichen. In einer Abwandlung zu beiden Ausführungsbeispielen ist das zweite Gleitlager 41 auf der Innenseite des Kragenzuges 19 in einem von der Nabe 22 freien Bereich angeordnet und das stärker belastete Keilsegment 27a hierin mittels eines Auslegers gelagert.

Die Reibung zwischen dem ersten Keilsegment 27a und dem Kragenzug 19 hat nicht nur einen Einfluss auf den Wirkungsgrad, sondern auch auf die Selbsthemmung des Getriebes des Beschlags 10. Damit wenigstens einer der beiden Beschläge 10 des Fahrzeugsitzes 1 trotz der zweiseitigen Gleitlagerung des ersten Keilsegmentes 27a selbsthemmend bleibt, ist erfindungsgemäß bei diesem Beschlag 10 eine im Ruhezustand des Beschlags 10 wirksame Bremse vorgesehen, vorliegend eine Schlingfederbremse 44, welche in einer Schlingfederbuchse 46 angeordnet und aufgrund ihrer Vorspannung reibschlüssig an deren Innenwand anliegt. Die beispielsweise aus Kunststoff hergestellte Schlingfederbuchse 46 ist drehfest am zweiten Beschlagteil 12 angeordnet, indem drei um je 120° zueinander versetzte Dreier-Gruppen von radial (und/oder axial) abstehenden Schlingfederbuchsenarmen 48 formschlüssig in die auf der Rückseite des Zahnrades 16 durch den Prägevorgang entstandene Innenverzahnung greifen.

Zum Betätigen weist die Schlingfederbremse 44 an ihren Enden je einen radial nach innen ragenden Schlingfederarm 50 auf. Das erste Keilsegment 27a ist mit einem axial abstehenden Bremsnocken 51 versehen, welcher mit Spiel in Umfangsrichtung zwischen den beiden Schlingfederarmen 50 angeordnet ist, d.h. in dem Bereich innerhalb derselben. Eine Anlage des Bremsnockens 51 an einen Schlingfederarm 50 wirkt schließend auf die Schlingfederbremse 44, d.h. die Schlingfederbremse 44 bremst und verhindert eine Drehung der den Exzenter definierenden Bauteile relativ zum zweiten Beschlagteil 12. Mit der Blockade des Exzenters ist auch das erste Beschlagteil 11 relativ zum zweiten Beschlagteil 12 fixiert.

Um die Bremswirkung der Schlingfederbremse 44 beim Antrieb des Mitnehmers 21 aufzuheben, ist am Mitnehmer 21 einerseits an dem Ende des Mitnehmersegmentes 25, welches dem ersten Keilsegment 27a zugeordnet ist, ein erster Mitnehmernocken 53 und andererseits in dem Bereich, der zwischen den Enden des Mitnehmersegmentes 25 mit etwa gleichem radialen Abstand angeordnet ist, ein zweiter Mitnehmernocken 55 vorgesehen, welche beide axial abstehen. Zwischen den beiden Mitnehmernocken 53 und 55 sind mit Spiel die Schlingfederarme 50 samt dem Bremsnocken 51 angeordnet, d.h. die Mitnehmernocken 53 und 55 sind in Umfangsrichtung außerhalb der Schlingfederarme 50 angeordnet. Wenn der Mitnehmer 21 gedreht wird, gelangt zunächst einer der Mitnehmernocken 53 oder 55 in Anlage an einen Schlingfederarm 50, was öffnend auf die Schlingfederbremse 44 wirkt und die Bremswirkung aufhebt. Im weiteren Verlauf treibt der Exzenter die oben beschriebene Abwälzbewegung der Beschlagteile 11 und 12 aneinander an.

### Bezugszeichenliste

- 1: Fahrzeugsitz
- 3: Sitzteil
- 4: Lehne
- 5: Handrad
- 10: Beschlag
- 11: erstes Beschlagteil
- 12: zweites Beschlagteil
- 16: Zahnrad
- 17: Zahnkranz
- 19: Kragenzug
- 21: Mitnehmer
- 22: Nabe
- 23: Bohrung
- 25: Mitnehmersegment
- 27a: erstes Keilsegment
- 27b: zweites Keilsegment
- 28: erstes Gleitlager
- 30: Omegafeder
- 31: Sicherungsring
- 41: zweites Gleitlager
- 44: Schlingfederbremse
- 46: Schlingfederbuchse
- 48: Schlingfederbuchsenarme
- 50: Schlingfederarm
- 51: Bremsnocken
- 53: erster Mitnehmernocken
- 55: zweiter Mitnehmernocken

## Patentansprüche

1. Beschlag für einen Fahrzeugsitz, insbesondere für einen Kraftfahrzeugsitz, mit einem ersten Beschlagteil (11), einem mit dem ersten Beschlagteil (11) in Getriebeverbindung stehenden zweiten Beschlagteil (12), einem Mitnehmer (21) und Keilsegmenten (27a, 27b), welche wenigstens teilweise einen im ersten Beschlagteil (11) drehbar gelagerten Exzenter zum Antrieb einer Abwälzbewegung von erstem Beschlagteil (11) und zweitem Beschlagteil (12) aneinander definieren, einer Feder (30), welche die Keilsegmente (27a, 27b) in Umfangsrichtung auseinander drückt und damit den Beschlag (10) im Ruhezustand spielfrei stellt, und einem ersten Gleitlager (28) oder Wälzlager, mittels welchem die Keilsegmente (27a, 27b) mit geringer Reibung am zweiten Beschlagteil (12) gelagert sind, **dadurch gekennzeichnet, dass** wenigstens ein erstes (27a) der beiden Keilsegmente (27a, 27b) mittels eines zweiten Gleitlagers (41) oder Wälzlagers mit geringer Reibung am ersten Beschlagteil (11) gelagert ist, und dass eine Bremse vorgesehen ist, welche im Ruhezustand des Beschlags (10) das nichtselbsthemmende erste Keilsegment (27a) hält, eine Drehung der den Exzenter definierenden Bauteile relativ zum zweiten Beschlagteil (12) verhindert und mit dieser Blockade des Exzenters die Beschlagteile (11, 12) relativ zueinander fixiert, und welche beim Antrieb der Abwälzbewegung gelöst wird.

2. Beschlag nach Anspruch 1, **dadurch gekennzeichnet, dass** das erste Keilsegment (27a) das beim Antrieb des Beschlags (10) höher belastete der beiden Keilsegmente (27a, 27b) ist.

3. Beschlag nach Anspruch 1 oder 2, **dadurch gekennzeichnet, dass** beide Keilsegmente (27a, 27b) mittels des oder je eines zweiten Gleitlagers (41) mit geringer Reibung am ersten Beschlagteil (11) gelagert sind.

4. Beschlag nach einem der vorhergehenden Ansprüche, **dadurch gekennzeichnet, dass** zur Ausbildung des Getriebes am zweiten Beschlagteil (12) ein Zahnrad (16) mit einer Außenverzahnung und am ersten Beschlagteil (11) ein Zahnkranz (17) mit einer Innenverzahnung ausgeprägt sind, welche miteinander kämmen.

5. Beschlag nach Anspruch 4, **dadurch gekennzeichnet, dass** das erste Beschlagteil (11) auf der dem Zahnrad (16) zugewandten Seite konzentrisch zur Innenverzahnung des Zahnkranzes (17) einen angeformten Kragenzug (19) aufweist.

6. Beschlag nach Anspruch 5, **dadurch gekennzeichnet, dass** auf dem Kragenzug (19) wenigstens indirekt mit ihrer gekrümmten Innenseite die beiden Keilsegmente (27a, 27b) abgestützt sind, die mit ihren gekrümmten Außenseiten das in das zweite Beschlagteil (12) drehfest eingepresste erste Gleitlager (28) lagern.

7. Beschlag nach Anspruch 6, **dadurch gekennzeichnet, dass** das zweite Gleitlager (41) praktisch unbeweglich am ersten Keilsegment (27a) sitzt und mit geringer Reibung auf dem Kragenzug (19) gleitet.

8. Beschlag nach Anspruch 6 oder 7, **dadurch gekennzeichnet, dass** beide Keilsegmente (27a, 27b) auf dem als nahezu vollständig geschlossener Ring ausgebildeten zweiten Gleitlager (41) sitzen.

9. Beschlag nach einem der vorhergehenden Ansprüche , **dadurch gekennzeichnet, dass** als Bremse eine Schlingfederbremse (44) vorgesehen ist, welche insbesondere zwei Schlingfederarme (50) aufweist.

10. Beschlag nach Anspruch 9, **dadurch gekennzeichnet, dass** die Schlingfederbremse (44) an einer Schlingfederbuchse (46) anliegt, welche drehfest zum zweiten Beschlagteil (12) ist.

11. Beschlag nach Anspruch 10, **dadurch gekennzeichnet, dass** die Schlingfederbuchse (46) mehrere radial abstehende Schlingfederbuchsenärme (48) aufweist, welche formschlüssig in eine Innenverzahnung des zweiten Beschlagteils (12) greifen.

12. Beschlag nach einem der Ansprüche 9 bis 11, **dadurch gekennzeichnet, dass** wenigstens eines der Keilsegmente (27a), insbesondere das erste Keilsegment (27a), einen Nocken (51) aufweist, welcher bei Anlage an einen Schlingfederarm (50) schließend auf die Schlingfederbremse (44) wirkt.

13. Beschlag nach einem der Ansprüche 9 bis 12, **dadurch gekennzeichnet, dass** der Mitnehmer (21) wenigstens einen Mitnehmernocken (53, 55) aufweist, welcher bei Anlage an einen Schlingfederarm (50) öffnend auf die Schlingfederbremse (44) wirkt.

14. Fahrzeugsitz, insbesondere Kraftfahrzeugsitz, mit einem Sitzteil (3) und einer relativ zum Sitzteil (3) in ihrer Neigung einstellbaren Lehne (4), welche auf wenigstens einer Seite des Fahrzeugsitzes (1) mittels eines Beschlags (10) nach einem der vorhergehenden Ansprüche am Sitzteil (3) angebracht ist.

## Claims

1. Fitting for a vehicle seat, in particular for a motor vehicle seat, having a first fitting member (11), a second fitting member (12) which is mechanically connected to the first fitting member (11), a carrier (21) and wedge portions (27a, 27b) which at least partially define an eccentric, which is rotatably supported in the first fitting member (11), for driving a rolling movement of the first fitting member (11) and the second fitting member (12) relative to each other, having a spring (30) which presses the wedge portions (27a, 27b) away from each other in the direction of the periphery and therefore places the fitting (10) in a play-free manner in the rest state, and having a first sliding bearing (28) or rolling bearing, by means of which the wedge portions (27a, 27b) are supported with little friction on the second fitting member (12), **characterised in that** at least a first portion (27a) of the two wedge portions (27a, 27b) is supported with little friction on the first fitting member (11) by means of a second sliding bearing (41) or rolling bearing, and **in that** there is provided a brake which retains the non-self-inhibiting first wedge portion (27a) when the fitting (10) is in the rest state, which blocks rotation of the components which define the eccentric relative to the second fitting member (12) and which fixes the fitting members (11, 12) relative to each other with that blocking of the eccentric, and which is released when the rolling movement is driven.

2. Fitting according to claim 1, **characterised in that** the first wedge portion (27a) is the portion from the two wedge portions (27a, 27b) that is more heavily loaded when the fitting (10) is driven.

3. Fitting according to claim 1 or claim 2, **characterised in that** both wedge portions (27a, 27b) are supported with little friction on the first fitting member (11) by means of the second sliding bearing (41) or a second sliding bearing (41) in each case.

4. Fitting according to any one of the preceding claims, **characterised in that**, in order to construct the mechanism, a toothed wheel (16) is formed on the second fitting member (12) so as to have an external tooth arrangement and a ring of teeth (17) is formed on the first fitting member (11) so as to have an internal tooth arrangement, which engage with each other.

5. Fitting according to claim 4, **characterised in that** the first fitting member (11) has a formed-on collar extension (19) at the side facing the toothed wheel (16) concentrically relative to the internal tooth arrangement of the ring of teeth (17).

6. Fitting according to claim 5, **characterised in that** the two wedge portions (27a, 27b) which support the first sliding bearing (28) which is pressed into the second fitting member (12) in a rotationally secure manner with the curved outer sides thereof are supported on the collar extension (19) at least indirectly with the curved inner side thereof.

7. Fitting according to claim 6, **characterised in that** the second sliding bearing (41) is arranged in a practically immovable manner on the first wedge portion (27a) and slides with little friction on the collar extension (19).

8. Fitting according to claim 6 or claim 7, **characterised in that** the two wedge portions (27a, 27b) are arranged on the second sliding bearing (41) which is constructed as a practically completely closed ring.

9. Fitting according to any one of the preceding claims, **characterised in that** a wrap spring brake (44) which particularly has two wrap spring arms (50) is provided as the brake.

10. Fitting according to claim 9, **characterised in that** the wrap spring brake (44) abuts a wrap spring bushing (46) which is rotationally secure relative to the second fitting member (12).

11. Fitting according to claim 10, **characterised in that** the wrap spring bushing (46) has a plurality of radially projecting wrap spring bushing arms (48) which engage in a positive-locking manner in an internal tooth arrangement of the second fitting member (12).

12. Fitting according to any one of claims 9 to 11, **characterised in that** at least one of the wedge portions (27a), in particular the first wedge portion (27a), has a cam (51) which acts on the wrap spring brake (44) in a closing manner in the event of abutment against a wrap spring arm (50).

13. flitting according to any one of claims 9 to 12, **characterised in that** the carrier (21) has at least one carrier cam (53, 55) which acts on the wrap spring brake (44) in an opening manner in the event of abutment against a wrap spring arm (50).

14. Vehicle seat, in particular a motor vehicle seat, having a seat member (3) and a backrest (4) which can be adjusted relative to the seat member (3) in terms of its inclination and which is fitted to the seat member (3) at least at one side of the vehicle seat (1) by means of a fitting (10) according to any one of the preceding claims.

## Revendications

1. Armature pour un siège de véhicule, en particulier pour un siège de véhicule automobile, comportant une première partie d'armature (11), une deuxième partie d'armature (12) s'engrenant avec la première partie d'armature (11), un organe d'entraînement (21) et des segments en forme de coin (27a, 27b), lesquels définissent au moins en partie un excentrique monté rotatif dans la première partie d'armature (11) pour la commande d'un mouvement de roulement de la première partie d'armature (11) et de la deuxième partie d'armature (12) l'une contre l'autre, un ressort (30), lequel écarte l'un de l'autre les segments en forme de coin (27a, 27b) dans la direction périphérique et par là place sans jeu l'armature (10) dans l'état de repos, et un premier palier à glissement (28) ou palier à roulement, au moyen duquel les segments en forme de coin (27a, 27b) sont montés avec un frottement réduit sur la deuxième partie d'armature (12), **caractérisée par le fait qu'**au moins un premier (27a) des deux segments en forme de coin (27a, 27b) est monté sur la première partie d'armature (11) avec un frottement réduit au moyen d'un deuxième palier à glissement (41) ou palier à roulement, et qu'un frein est prévu, lequel maintient dans l'état de repos de l'armature (10) le premier segment en forme de coin (27a) non autobloquant, empêche une rotation des éléments définissant l'excentrique par rapport à la deuxième partie d'armature (12) et fixe, par ce blocage de l'excentrique, les parties d'armature (11, 12) l'une par rapport à l'autre, et lequel est débloqué lors de la commande du mouvement de roulement.

2. Armature selon la revendication 1, **caractérisée par le fait que** le premier segment en forme de coin (27a) est le plus fortement chargé des deux segments en forme de coin (27a, 27b) lors de la commande de l'armature (10).

3. Armature selon l'une des revendications 1 ou 2, **caractérisée par le fait que** les deux segments en forme de coin (27a, 27b) sont montés au moyen du ou d'à chaque fois un deuxième palier à glissement (41) avec un frottement réduit sur la première partie d'armature (11).

4. Armature selon l'une des revendications précédente, **caractérisée par le fait que**, pour la formation de l'engrenage sur la deuxième partie d'armature (12), une roue dentée (16) est configurée avec une denture externe et, sur la première partie d'armature (11), une couronne dentée (17) est configurée avec une denture interne, lesquelles s'engrènent mutuellement.

5. Armature selon la revendication 4, **caractérisée par le fait que** la première partie d'armature (11) présente sur le côté tourné vers la roue dentée (16) concentriquement à la denture interne de la couronne dentée (17) une collerette façonnée (19).

6. Armature selon la revendication 5, **caractérisée par le fait que**, sur la collerette (19), sont supportés, au moins indirectement par leur côté interne courbe, les deux segments en forme de coin (27a, 27b), qui avec leurs côtés externes courbes positionnent le premier palier à glissement (28) comprimé solidaire en rotation dans la deuxième partie d'armature (12).

7. Armature selon la revendication 6, **caractérisée par le fait que** le deuxième palier à glissement (41) est monté pratiquement immobile sur le premier segment en forme de coin (27a) et glisse avec un frottement réduit sur la collerette (19).

8. Armature selon l'une des revendications 6 ou 7, **caractérisée par le fait que** les deux segments en forme de coin (27a, 27b) sont montés sur le deuxième palier. à glissement (41) réalisé sous la forme d'une bague presque entièrement fermée.

9. Armature selon l'une des revendications précédentes, **caractérisée par le fait que**, comme frein, est prévu un frein à ressort enroulé (44), lequel présente en particulier deux bras de ressort enroulé (50).

10. Armature selon la revendication 9, **caractérisée par le fait que** le frein à ressort enroulé (44) s'applique sur une douille de ressort enroulé (46), laquelle est solidaire en rotation de la deuxième partie d'armature (12).

11. Armature selon la revendication 10, **caractérisée par le fait que** la douille de ressort enroulé (46) présente plusieurs bras de douille de ressort enroulé (48) faisant saillie radialement, lesquels viennent en prise par complémentarité de forme dans une denture interne de la deuxième partie d'armature (12).

12. Armature selon l'une des revendications 9 à 11, **caractérisée par le fait qu'**au moins l'un des segments en forme de coin (27a), en particulier le premier segment en forme de coin (27a), présente une came (51), laquelle, lors de l'application sur un bras de ressort enroulé (50), agit en vue de la fermeture sur le frein à ressort enroulé (44).

13. Armature selon l'une des revendications 9 à 12, **caractérisée par le fait que** l'organe d'entraînement (21) présente au moins une came d'entraînement (53, 55), laquelle, lors de l'application sur un bras de ressort enroulé (50) agit en vue de l'ouverture sur le frein à ressort enroulé (44).

14. Siège de véhicule, en particulier siège de véhicule automobile, comportant une partie d'assise (3) et un dossier (4) réglable dans son inclinaison par rapport à la partie de siège (3), lequel dossier, sur au moins un côté du siège de véhicule (1), est appliqué sur la partie de siège (3) au moyen d'une armature (10) selon l'une des revendications précédentes.
